# EUROPEAN PATENT APPLICATION

(11) **EP 0 672 642 A1**
(43) Date of publication of application: **20.09.1995**
(21) Application number: 94103945.5
(22) Date of filing: 14.03.1994
(51) Int. Cl.: C05F 11/00

(54) **Method and nutritive composition for intensive bio-production of horticultural plants**

(71) Applicant: Demeter, Laszlo, H-1121 Budapest (HU); Saly, György, H-1125 Budapest (HU); Magyar, György, H-1125 Budapest (HU); Takacs, Péter, H-1122 Budapest (HU); Schwald, Adalbert, A-6800 Feldkirch (AT); Wanger, Markus, Dr., FL-9490 Vaduz (LI)
(72) Inventor: Laszlo, Demeter, H-1121 Budapest (HU); György, Saly, H-1125 Budapest (HU); György, Magyar, H-1125 Budapest (HU)
(74) Representative: Vogeser, Werner, Dipl.-Ing.

(57) **Abstract**

The invention relates to a method for intensive bio-production of horticultural plants on free soil as well as in greenhouse utilizing the bio-conversion of chemical nutritives, wherein biomass is produced by intensive fermentation and the biomass is used as nutritive for growth of the plants.

The invention also relates to a nutritive composition for intensive production of plants which contains a biomass resulting from fermentation of algae and is mixed with 0.1 to 99.9 percent mass portion of carrier or subsidiary material.

## Description

### FIELD OF THE INVENTION

The invention relates to a method for intensive bio-production of horticultural plants on free soil as well as in greenhouse utilizing the bio-conversion of chemical nutritives. The invention also relates to a nutritive composition for intensive production of plants. With these, bio-plant products of high biological value can be produced with mass production methods.

### BACKGROUND OF THE INVENTION

As is well known, plant cultivation has had an ever increasing yield all over the world in recent years, thanks to ever increasing amount of artificial fertilizer and chemical plant protective agents. The benefit of never-seen plant yield is deteriorated by the newly observed close connection of induction of several diseases connected to metabolic progresses of the human organization by the nutriment and by the chemical agents introduced into the human body by the nutritives. About nearly all of the agents having crucial importance in today's agricultural production have been shown that they are dangerous to the health in a concentration which is to be found in products, aliments of the intensive agriculture, as it is described in A. Meier-Ploeger, H. Vogtmann: Relation of the Ecological agriculture to the Quality of the Aliments, Biokultúra, 2, 1990 (Budapest), for example.

As a result of this recognition, the bio-production of plant cultivation has been started with the aim of using natural agents instead of the chemical ones and, thus, considerably reducing the sources of dangers as mentioned above. However, the bio-production induces new problems such as drastic reduction of yields and difficult availability of biological plant nutriment and protectives. As a matter of fact, non of these two ways are satisfactory, since a suitable amount of unhealthy aliments can be produced with the help of chemical agents, whilst the bio-produced products have a high biological value but their amount (yield) is very small, thus, the whole population can not be fed with them.

The main purpose of the invention is the elimination of this discrepancy by preparation of a method and nutriment which are suitable for a plant cultivation having the intensity and yield of the conventional chemically aided agriculture but with which the ingredient parameters and biological values of the products are at least as good as that of the bio-plantation.

The invention is based on the recognition that all of the natural plant nutriments are generated by decomposition of higher organizations as a last phase of a biological nutriment chain which enables the start of new nutriment chains such as the useful plants. The chemical (artificial) nutritives intervene into this system and they brake down the biological counterbalance. If, according to our basic idea, a short nutriment chain with great biological production can be introduced before starting the cultivation of the useful plants, the nutrition of the useful plants can be provided by the decomposition products of this nutriment chain in form of a very intensive nutriment supply.

Most conveniently, this nutriment chain is to be started under controlled conditions with organization of very intensive growth, whereby a single plant should represent the growing phase of the nutriment chain and the decomposition of that plant should provide an easily consumable nutriment for the useful plants in the next phase.

During our experiments, it has been recognized, that green or blue algae preferable Chlorella sp. and/or Scenedesmus sp. can be bred rapidly in suitably formed basins and using chemical nutritive solution in an amount that they provide enough nutriment for the useful plants of the given territory, and this biomass can be introduced in a suitable manner into the soil or substitute material. In this way, a biological conversion is carried out during which secondary plant nutriment is produced from primary chemical agents with the aid of a nutriment chain influenced and controlled by us. With this, the negative effects of the chemical plant nutrition are excluded.

### ESSENCE OF THE INVENTION

According to the improvement in this invention, the nutriment for growth of the plants is provided by a biomass being produced by an intensive fermentation.

In a preferred realization of the method according to our invention, the biomass is produced by non-sterile fermentation of algae.

It is also preferred when the culture of the algae is held to be congener by regulating environmental factors on basis of the competitive exclusion.

It is also preferred when the culture is held in the phase of exponential growth with the aid of nutriment introduction and product out-lift.

It has been recognised that, most conveniently, the electric conductivity of the culture should be bellow 4 mS and its pH value should be between 5,5 and 7,0 and these values should be held constantly.

As a matter of fact, the propagation of the algae is carried out in a fermentation apparatus. In case of smaller amounts, the equipment includes a vessel made of metal or plastic but, with greater amounts, specially formed basins or system of basins are needed. In both cases, the bio-conversion is a non-sterile fermentation, but with maintaining the environmental parameters within a narrow range, entities of overwhelmingly a single species are present in the culture on basis of competitive exclusion as is known from the ecology.

Among the parameters of the process, the most important is the nutritive solution. The pH value, the electric conductivity and the concentration should be determined according to the needs of the plant intended to be nourished with the biomass as well as according to the species to be propagated in the ferment.

Another important feature is the formation of the basin, e. g. its depth and the arrangement of aeration equipment on its bottom for being the oxygen and carbon hydroxide content of the culture in the ferment controllable. The system is to be constructed for providing anaerobic, optionally aerobic or totally aerobic conditions, even within one propagation cycle of one culture.

Third feature also providing control possibilities during the propagation are sensors for at least periodically measuring the conductivity and the pH value within the ferment with the aid of which the parameters required by the given bio-conversion can be observed and in case of discrepancy, the agents being necessary for providing optimal conditions of the system by manually or automatically introducing the necessary agents.

Maximal efficiency of the bio-conversion can be reached by maintaining the system in the upper sphere of the exponential phase after creeping of the propagation. For this, the nutriments necessitated by the culture is introduced periodically and the biomass will be taken away periodically, too, but the amount of the living material taken away is limited to maintaining the propagation curve within its upper third of the exponential phase.

According to our invention we produced a new nutritive composition for intensive production of plants, which is contained in a biomass resulting from fermentation of algae and is mixed with 0,1 to 99,9 percent mass portion of carrier or subsidiary material.

### PREFERRED REALIZATION OF THE INVENTION

The produced primary biomass can be utilized directly or after converting it into the preparation as in this invention. In both cases, the decomposition phase of the nutriment chain is provided by bacteria promoting the conversion into secondary nutriment. This conversion can be carried out in the soil as well as in a suitable equipment.

In the course of producing the preparation as in this invention, the biomass resulting from the culture is dehydrated in the first step with the help of a suitable technology. According to the degree of dehydration, two categories of preparations can be categorized.

If the dehydration is partial only, the preparation is a so called bio-concentrate which can easily be brought into solution readily usable in plant cultures.

If the dehydration is a total one, the preparation is in dusty form which can be handled with the machines of conventional fertilization. Besides dehydration, other manipulations can also be necessary, depending on the usage of the preparation such as sterilization, application onto an inert carrier, granulation or graining.

The invention will be described in more detail with the aid of the following ***examples.***

### Example 1

### (Conditions of a general method)

In a given greenhouse, the daily need on water and nutriment necessitated to the plantation of the given vegetable can be calculated. Only 60 to 80 percent of this calculated amount of nutriment will be needed thanks to the positive effect of the biological conversion.

Near to the greenhouse or within it, a basin or an open fermentation reactor is built, the inner capacity of which being 2 to 10 times greater than the amount of irrigation water needed daily. Two to three weeks before starting the plantation, the filled-up basin is engrafted with a species of green algae or blue algae, always according to the requirements of the territory, and the introduction of nutriments in form of agents with technical limpidity is began with. It is a basic requirement, however, that although the concentration of used nutriments can be different for every species of algae, the concentration of three most important elements can not be higher than 300 mg/l for nitrogen, 150 mg/l for phosphor and 280 mg/l for potassium.

After starting the propagation of the culture, pH value and electric conductivity of the solution are constantly observed. The pH is held in between 5,5 and 7,0 and conductivity is below 4 mS. When the culture reaches the end of its exponential growth (this is 10 to 20 days, depending on the species), biomass is taken away at the first time.

Preferably, this can be carried out by pumping cca. the half of the culture into an irrigation basin and into this half, the introduction of nutriments is stopped. Irrigation is carried out then from this material, directly or after dilution with water. The parameters of the irrigation water can adjusted also by measuring the pH value and the conductivity. This can be carried out, preferably, by an entirely automated irrigation system within which the pH values and the electric conductivity of the introduced biological agencies are constantly measured by suitable sensors and dilution water is automatically added according to the pre-set parameters. All of the known irrigation systems can find utilization as distribution equipment. In the meantime, the introduction of water and nutriments is started into the fermentation basin in daily portions to held the culture in the phase of exponential growth. At the time of running out the bio-agencies of the irrigation basin, the fermentation basin will be filled up once again, and the process can start from the beginning.

If production of preparation is aimed, the material is taken out of fermentation basin into a settling tank and is mixed up with a natural sediment accelerator such as clay mineral. After sedimentation of the biomass, the clear water is sucked up, the lower thick phase is used or further processed. The utilization is carried out, in the rule, by injectors well known in the plantation practice, whereby the material is pumped under high pressure into the soil.

The material can further be processed by dehydration, sterilization, application onto inert carrier etc.

Dehydration can be carried out by mild dehydration with temperatures below 50 degree centigrade and/or by use of centrifuge. For sterilization, this with ultraviolet radiation is preferred for the sake of preserving the biological effectiveness.

As inert carriers, basically natural materials and their derivatives can be taken into consideration, such as cellulose polysaccharides. As a matter of fact, the nutritive composition can be produced with these carriers through adsorption as well as through absorption.

When using the method and the preparation as in this invention, high yield of plant production with best biological values can be provided, the ingredient quality values of which are similar to that of bio-products planted without any chemical agent.

Furthermore, it can not be disregarded, that during the fermentation, macro molecules being useful for the plant will be produced as an impact of bio-conversion. Those macro molecules can not be provided by conventional plant nutrition. Therefore, the growth of the plants is quicker, their tolerance to stresses as well as resistance are greater when this invention is used with them, than conventionally.

### Example 2

### (Method of intensive production of cucumber)

Cucumbers are produced in a greenhouse, rising them up in cotton-rock beds and getting nutritive composition out, by the help of dropping irrigation. The average irrigation claim of cucumber is 4 litre per plant, and it also claims 150-250 mg/l for nitrogen, 100-150 mg/l for phosphor and 150-250 mg/l for potassium (calculated on the volume of irrigation water). According to our invention the demand of irrigation 4 litre x 4 days is calculated and is built a tank or basin for these volume of water.

Three weeks before starting the plantation, concentration of nutritive composition is set to next level: 110 mg/l for nitrogen, 80 mg/l for phosphor and 120 mg/l for potassium by the help of cheaper mineral components (e.g. chemical fertilizer). The solution is completed by composition of microelements.

The next step is to inoculate the basin, using Scenedesmus species, as algae. It is suitable to calculate 1 litre inoculum for one cubic meter of water.

After starting the propagation of the culture, pH value and electric conductivity of the solution are constantly observed. The pH is held in between 5.5 and 7.0 and conductivity is below 4 mS. When the culture reaches the end of its exponential growth (this is 10 to 20 days, depending on the species), biomass in taken away at the first time.

Preferably, this can be carried out by pumping cca. the half of the culture into an irrigation basin and into this half, the introduction of nutriments is stopped. Irrigation is carried out then from this material, directly or after dilution with water. The parameters of the irrigation water can adjusted also by measuring the pH value and conductivity. This can be carried out, preferably, by an entirely automated irrigation system within which the pH values and the electric conductivity of the introduced biological agencies are constantly measured by suitable sensors and dilution water is automatically added according to the pre-set parameters. All of the known irrigation systems can find utilization as distribution equipment. In the meantime, the introduction of water and nutriments is started into the fermentation basin in daily portions to held the culture in the phase of exponential growth. At the time of running out the bioagencies of the irrigation basin, the fermentation basin will be filled up once again, and the process can start from the beginning.

As a result of this irrigation method cucumber grows ripe sooner, harvest results increase and the quality of harvest become better.

According to data of this example the harvest produced by this technology surpasses the control harvest provided by traditional technology. Difference is 26.2 % per one plant, where the circumstances were the same, except adding of the nutritive composition.

### Example 3

### (Method of intensive production of tomato)

Our purpose is to produce tomato in a big air-spaced folio tent on mild, sandy soil by dropping irrigation.

By the traditional technology, before planting, 200 m³/hectare compost is mixed into the soil, and during the culturing season, about 4500-4600 m³ water is sprinkled out, consisting 600 kg nitrogen, 500 kg P₂O₅ and 700 kg K₂O - these quantities can be changed, of course, depending on the weather.

According to our invention, three weeks before starting the plantation, a 150 m³ basin is prepared, from which the irrigation is made. Similarly to the traditional technology, our method calculates 4500 ml for water, but we use only 500 kg nitrogen, 420 kg P₂O₅ and 580 kg K₂O, for whole irrigation period. Filling up the basin, macro-nutritive elements are measured in depending on the volume of water and using cheaper nutritive compositions. Then the basin have to be inoculated by algae. It can be used either clear Chlorella Scenedesmus mixed culture, depending on the climate. Finally, micro-nutritive compositions are added to the system.

The culture needs three weeks for the propagation to the required degree. Using the same method as described in Example 1, pH value and electric conductivity are constantly observed, and also suitable to measure the concentration of inoculum, occasionally.

Before planting is advisable to mix 200 m³/hectare compost into the soil, and its effect can be more advantageous by using bio-irrigation. At the end of the third week, the culture gets the required density and the irrigation can be started. The same dropping system can be used as in traditional technology. The water, has been sprinkled out of the basin, needs to supply and to complete with nutritive components. In order to get better effect, basin is kept on stirring. In consequence of using of our invention, the cost of chemical fertilizer decreased by 21%, meanwhile the total income increased by 20%, comparing to traditional production. Using of our method also increased the yield of the harvest, and the crop has high quality.

### Example 4

### (A nutritive composition to promote intensive bio-production)

The method is the same as described in example 1., with a smaller deviation. On the 20. day of production the materials taken out of fermentation basin into a settling tank and is mixed up with a natural sediment accelerator such as clay mineral. After sedimentation of the biomass, the clear water is sucked up, the lower thick phase is used or further processed. The utilization is carried out, in the rule, by injectors well known in the plantation practice, whereby the material is pumped under high pressure into the soil.

The material can further be processed by dehydration, sterilization, application into inert carrier etc.

Dehydration can be carried out by mild desiccation with temperatures below 50 degree centigrade and/or by use of centrifuge.

For sterilization, this with ultraviolet radiation is preferred for the sake of preserving the biological effectiveness.

As inert carriers, basically natural materials and their derivatives can be taken into consideration, such as cellulose polysaccharides. As a matter of fact, the nutritive composition can be produced with these carriers through adsorption as well as through absorption.
Product: a solid biomass (its dry material content: 82-85%)

## Claims

1. Method for intensive bio-production of horticultural plants on free soil as well as in greenhouse utilizing the bio-conversion of chemical nutritives, ***characterized in that*** biomass is produced by intensive fermentation and the biomass is used as nutritive for growth of the plants.

2. Method as claimed in Claim 1, ***wherein*** the biomass is produced by non-sterile fermentation of algae.

3. Method as claimed in Claim 1 or 2, ***wherein*** culture of the algae is held to be congener by regulating environmental factors on basis of competitive exclusion.

4. Method as claimed in any one of Claims 1 to 3, ***wherein*** the culture is held in the phase of exponential growth with the aid of nutriment introduction and product exit.

5. Method as claimed in any one of Claims 1 to 4, ***wherein*** Chlorella sp. or/and Scenedesmus sp. are applied as algae.

6. A nutritive composition for intensive production of plants, ***characterized in that*** it is contained in a biomass resulting from fermentation of algae and is mixed with 0,1 to 99,9 percent mass portion of carrier or subsidiary material.
